(19) Europäisches Patentamt
European Patent Office
Office européen des brevets

(11) **EP 2 233 284 B1**

(12) **EUROPEAN PATENT SPECIFICATION**

(45) Date of publication and mention
of the grant of the patent:
**07.11.2012 Bulletin 2012/45**

(21) Application number: **08866234.1**

(22) Date of filing: **25.12.2008**

(51) Int Cl.:
***B32B 27/28*** (2006.01)      ***B32B 27/36*** (2006.01)
***G09F 3/04*** (2006.01)

(86) International application number:
**PCT/JP2008/003986**

(87) International publication number:
**WO 2009/084212 (09.07.2009 Gazette 2009/28)**

(54) **SHRINK FILM AND CYLINDRICAL SHRINK LABEL**

SCHRUMPFFOLIE UND ZYLINDRISCHES SCHRUMPFETIKETT

FILM RÉTRACTABLE ET ÉTIQUETTE CYLINDRIQUE RÉTRACTABLE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.12.2007 JP 2007337171**

(43) Date of publication of application:
**29.09.2010 Bulletin 2010/39**

(73) Proprietor: **Fuji Seal International, Inc.
Osaka-shi, Osaka 532-0003 (JP)**

(72) Inventors:
• **KAMIKAGE, Nao
Osaka-shi
Osaka 538-0041 (JP)**
• **MAEDA, Shigenobu
Osaka-shi
Osaka 538-0041 (JP)**

• **TANAKA, Hidekazu
Osaka-shi
Osaka 538-0041 (JP)**
• **UMEDA, Hideaki
Osaka-shi
Osaka 538-0041 (JP)**
• **MIYAZAKI, Akira
Nabari-shi
Mie 518-0605 (JP)**

(74) Representative: **Grünecker, Kinkeldey,
Stockmair & Schwanhäusser
Leopoldstrasse 4
80802 München (DE)**

(56) References cited:
**WO-A2-2007/050605      JP-A- 9 070 927
JP-A- 60 244 547      JP-A- 2000 334 897
JP-A- 2006 123 482      JP-A- 2006 315 416
JP-A- 2006 326 952      JP-A- 2008 307 896**

**Description**

The present invention relates to a multilayer shrink film which is composed of different types of components and does not suffer from delamination (interlayer peeling) during shrink processing. Specifically, it relates to a multilayer shrink film including a polypropylene resin film layer and a polyester resin film layer, which has a low specific gravity and satisfactory shrinkability, and which has such excellent interlaminar adhesion as to avoid delamination. The present invention also relates to a cylindrical shrink label (shrink sleeve label) including the shrink film and a printed layer provided on or above the shrink film.

WO 2007/050605 A2 discloses a multilayer film comprising a skin layer comprising a modified aromatic polyester, an intermediate layer comprising a modified aromatic polyester, an intermediate layer comprising e.g. ethylene vinyl acetate having a vinyl acetate content of 20 wt.-%, 22 wt.-%, 24 wt.-%, 25 wt.-%, 28 wt.-% or 30 wt.-% and a base layer comprising e.g. at least about 50% by weight of a propylene copolymer.

Multilayer films (laminated films) each composed of different types of layers containing different resin materials are currently widely used in plastic films, in order to impart various different functions to the films. For instance, there is known a heat-shrinkable multilayer film which is composed of a multilayer film including a polyolefin resin layer and a polyester resin (poly(lactic acid) resin) layer. In this heat-shrinkable multilayer film, a polyolefin resin layer as a core layer and a further surface layer are used. The surface layer is composed of a non-polyolefin resin such as a poly(lactic acid) resin and is arranged on the core layer with the interposition of an adhesive resin layer. By adopting the configuration, the heat-shrinkable multilayer film is improved in film properties such as toughness and finish quality of shrinkage (see for example Patent Document 1). Independently, there is also known a film for heat-shrinkable labels, which film includes a core polyolefin resin layer, and a non-polyolefin resin layer such as a polyester resin layer arranged on both sides of the polyolefin resin layer with the interposition of an adhesive resin layer. This film has a low specific gravity and is satisfactorily sealable with a solvent (see for example Patent Document 2).

However, the multilayer films including layers of a polyolefin resin and of a polyester resin, when adopted to a cylindrical shrink label and subjected to heat shrinking process (shrink processing), suffer from delamination in a center-sealed portion (bonded portion) after shrinkage, although some of them have relatively high interlaminar bond strengths at ordinary temperature. The delamination problem occurs due to the difference in heat shrinkage behavior between the polyolefin resin and the polyester resin and occurs particularly when the film highly shrinks.

Patent Document 1: Japanese Unexamined Patent Application Publication (JP-A) No. 2006-326952
Patent Document 2: Japanese Unexamined Patent Application Publication (JP-A) No. H11(1999)-262981

Disclosure of Invention

Problems to be Solved by the Invention

An object of the present invention is to provide a shrink film which is a multilayer shrink film including layers of different polymers, i.e., a polypropylene resin and an aromatic polyester resin and which does not suffer from delamination even in a center-sealed portion during shrinking process. Another object of the present invention is to provide a cylindrical shrink label using the shrink film.

Particularly when the shrink film is, for example, a shrink film having a multilayer structure composed of five layers, i.e., (layer A)/(layer B)/(layer C)/(layer B)/(layer A), a recycled material may be used in the core layer (layer C) of the shrink film, for the propose of cost reduction. The recycled material is obtained by reusing, for example, chips and scraps formed during the production of the film. It is recognized that the use of the recycled material causes the layer C to contain a relatively large amount of a modified aromatic polyester resin, and this impairs decorativeness. Specifically, when a print is seen through the resulting film (for example, when the print is applied to the inner surface of a shrink label, i.e., applied to a surface of the label facing a container, and the applied print is seen from the outside of the label), the print may look dark and dull in color or may look cloudy. In the former case, for example, a color in the red range may look dark, or bright green may look darker one.

Accordingly, yet another object of the present invention is to provide a shrink film which does not cause dullness of color of a print and thereby does not impair the decorativeness even when the print is seen through the film, in which the layer C contains a relatively large amount of a modified aromatic polyester resin.

Still another object of the present invention is to provide a cylindrical shrink label using the shrink film. Means for Solving the Problems

After intensive investigations, the present inventors have found that a specific shrink film is excellent and does not suffer from delamination even when it highly shrinks through heat shrinking process, which shrink film includes a multilayer structure composed of three layers of three different components, i.e., a resin layer containing a modified aromatic polyester resin; an intermediate layer containing a specific ethylene-vinyl acetate resin; and a resin layer containing a polypropylene resin. The present invention has been made based on these findings.

The above and other objects of the invention are achieved by the shrink film according to claim 1 and the cylindrical shrink label according to claim 11. Preferred embodiments are claimed in the dependent claims.

The shrink film according to the present invention has a resin layer including a polypropylene resin, thereby has a low specific gravity, is lightweight, and, when adopted to a shrink label, can be easily separated from such as a poly(ethylene terephthalate) (PET) bottle upon recovering (recycling) by utilizing the difference in specific gravity. Furthermore, the shrink film has a resin layer including an aromatic polyester resin and thereby excels in shrinkability, strength properties (magnitude of toughness), and printability (when the aromatic polyester resin layer is used as a surface layer). In addition, the shrink film does not suffer from troubles caused by delamination during production and transfer processes, because it has high interlaminar bond strengths between the respective layers. Furthermore, when adopted to a cylindrical shrink label and subjected to heat shrinking process, the shrink film does not suffer from delamination in a center-sealed portion. Accordingly, the shrink film is useful as a cylindrical shrink label to be applied to containers such as PET bottle. Best Modes for Carrying Out the Invention

The Shrink film according to the present invention will be illustrated in further detail below.

The shrink film according to the present invention includes at least layers A, B, and C, in which the layer A is a resin layer containing a modified aromatic polyester resin (selected from a CHDM-modified PET and a 2,2-dialkyl-1,3-propanedol-modified PET) as a main component, the layer B is an intermediate layer containing an ethylene-vinyl acetate resin as a main component and having a content of vinyl acetate component in the layer of 20 to 30 percent by weight, and the layer C is a resin layer containing a polypropylene resin as a main component and containing a polymeric plasticizer. A resin composition for forming the layer A is also referred to as a "resin composition A"; a resin composition for forming the layer B is also referred to as a "resin composition B"; and a resin composition for forming the layer C is also referred to as a "resin composition C". As used herein the term "as a main component" refers to that the content of a component in question in a layer in question is 50 percent by weight or more, and more preferably 60 percent by weight or more, based on the total weight of a resin composition constituting the layer, unless otherwise specified.

The shrink film according to the present invention includes, in the film, a multilayer structure in which the layer A and the layer C are layered on each other via the layer B (intermediate layer). Specifically, the shrink film includes a multilayer structure composed of three layers of three different components in the order of (layer A)/(layer B)/(layer C) without the interposition of any other layer. Exemplary shrink films having such structures include three-layer multilayer films each composed of three different components, i.e., a multilayer structure of (layer A)/(layer B)/(layer C); and five-layer multilayer films each composed three different components, i.e., a multilayer structure of (layer A (surface layer))/(layer B (intermediate layer))/(layer C (core layer))/(layer B (intermediate layer))/(layer A (surface layer)), and a multilayer structure of (layer C (surface layer))/(layer B (intermediate layer))/(layer A (core layer))/(layer B (intermediate layer))/(layer C (surface layer)). The shrink film according to the present invention may further include one or more layers other than the layers A, B, and C, as long as the layers can be provided in-line during film forming process of the multilayer film. Examples of such other layers include anchor coating layers, easy-to-adhere layers, and coating layers such as antistatic agent layers.

Among them, preferred as the shrink film according to the present invention is one having a five-layer multilayer structure composed of three different components, in which the layers A, B, and C are layered on each other in the order of (layer A (surface layer))/(layer B (intermediate layer))/(layer C (core layer))/(layer B (intermediate layer))/(layer A (surface layer)) without the interposition of any other layer. The two layers A provided above both sides of the layer C are preferably layers having the same resin composition with each other; and, likewise, the two layers B provided on both sides of the layer C are preferably layers having the same resin composition with each other. The pairs of the layers A and the layers B, however, may each be layers having different compositions (for example, a layer A1 and a layer A2), respectively, within ranges not deviating from the conditions specified in the present invention and not adversely affecting advantageous effects of the present invention.

[Layer A (Modified Aromatic Polyester Resin Layer)]

The layer(s) A in the shrink film according to the present invention contains one or more modified aromatic polyester resins as a main component. The polyester resin is a polyester containing an aromatic ring in its structural unit. Examples thereof include various polyesters each composed of a dicarboxylic acid component and a diol component, of which representative examples include polymers and copolymers, formed through a condensation reaction of a diol with a dicarboxylic acid including an aromatic dicarboxylic acid; and mixtures of these polymers and/or copolymers. As used herein the term "modified" in the modified aromatic polyester resin refers to that the polyester resin is not composed of a single repeating unit but includes a modifying component. For instance, the term refers to that at least one of the dicarboxylic acid component and the diol component includes two or more components, namely, contains one or more modifying components in addition to the main component.

Exemplary aromatic dicarboxylic acid components for constituting the modified aromatic polyester resin include terephthalic acid, isophthalic acid, phthalic acid, 2,5-dimethylterephthalic acid, 5-t-butylisophthalic acid, 4,4'-biphenyldicarboxylic acid, trans-3,3'-stilbenedicarboxylic acid, trans-4,4'-stilbenedicarboxylic acid, 4,9'-dibenzyldicarboxylic acid, 1,4-naphthalenedicarboxylic acid, 1,5-naphthalenedicarboxylic acid, 2,3-naphthalenedicarboxylic acid, 2,6-naphthalenedicarboxylic acid, 2,7-naphthalenedicarboxylic acid, 2,2,6,6-tetramethylbiphenyl-4,4'-dicarboxylic acid, 1,1,3-trimethyl-3-phenylindene-4,5-dicarboxylic acid, 1,2-diphenoxyethane-4,4'-dicarboxylic acid, diphenyl ether dicarboxylic acid, 2,5-anthracenedicarboxylic acid, 2,5-pyridinedicarboxylic acid, and substitution derivatives of them. Among these, terephthalic acid and isophthalic acid are preferred, terephthalic acid is more preferred, from the viewpoints of, such as productivity, workability, and cost. Each of these components can be used alone or in combination. The content of the aromatic dicarboxylic acid component is preferably 80 percent by mole or more, and more preferably 90 percent by mole or more, based on the total amount of dicarboxylic acid components for use in the modified aromatic polyester resin. This range is preferred from the viewpoints of thermal stability and shrinkability.

The aromatic polyester resin for use herein may further contain one or more aliphatic or alicyclic dicarboxylic acid components as copolymerization components. Exemplary aliphatic dicarboxylic acid components herein include oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, heptadecanedioic acid, octadecanedioic acid, nonadecanedioic acid, icosanedioic acid, docosanedioic acid, 1,12-dodecanedionoic acid, and substitution derivatives of thereof. Exemplary alicyclic dicarboxylic acid components include 1,3-cyclopentanedicarboxylic acid, 1,2-cyclohexanedicarboxylic acid, 1,3-cyclohexanedicarboxylic acid, 1,4-cyclohexanedicarboxylic acid, 1,4-decahydronaphthalenedicarboxylic acid, 1,5-decahydronaphthalenedicarboxylic acid, 2,6-decahydronaphthalenedicarboxylic acid, and substitution derivatives of them. Among them, adipic acid is preferred. Each of these components can be used alone or in combination.

Exemplary diol components for constituting the modified aromatic polyester resin include aliphatic diols such as ethylene glycol, diethylene glycol, 1,2-propanediol, 1,3-propanediol, 1,3-butanediol, 1,4-butanediol, 1,5-pentanediol, 2,2-dimethyl-1,3-propanediol (neopentyl glycol), 1,6-hexanediol, 2-ethyl-2-methyl-1,3-propanediol, 2,2-diethyl-1,3-propanediol, 1,8-octanediol, 2-ethyl-2-butyl-1,3-propanediol, 2-ethyl-2,4-dimethyl-1,3-hexanediol, 1,10-decanediol, polyethylene glycol, and polypropylene glycol; alicyclic diols such as 1,2-cyclohexanedimethanol, 1,3-cyclohexanedimethanol, 1,4-cyclohexanedimethanol, and 2,2,4,4-tetramethyl-1,3-cyclobutanediol; and aromatic diols including ethylene oxide adducts of bisphenol compounds such as 2,2-bis(9'-R-hydroxyethoxydiphenyl)propane and bis(4'-p-hydroxyethoxyphenyl)sulfone, and xylylene glycol. Each of different diol components can be used alone or in combination.

In addition to the above-mentioned components, the modified aromatic polyester resin may further contain one or more constitutional units selected from the group consisting of: hydroxycarboxylic acids such as p-hydroxybenzoic acid and p-hydroxyethoxybenzoic acid; monocarboxylic acids such as benzoic acid and benzoylbenzoic acid; polycarboxylic acids such as trimellitic acid; monohydric alcohols such as polyalkylene glycol monomethyl ethers; and polyhydric alcohols such as glycerol, pentaerythritol, and trimethylolpropane.

Above all, preferred as the modified aromatic polyester resin are modified poly(ethylene terephthalate)s (PETs) which correspond to PETS using terephthalic acid as a dicarboxylic acid component and ethylene glycol (EG) as a diol component, in which part of the dicarboxylic acid component and/or diol component is substituted by another dicarboxylic acid component and/or another diol component.

Exemplary dicarboxylic acid components (copolymerization components) for use as modifying components in the modified PETs include cyclohexanedicarboxylic acid, adipic acid, and isophthalic acid. Exemplary diol components (copolymerization components) for use as modifying components include 1,4-cyclohexanedimethanol (CHDM); glycols each represented by the structural formula of $R^1R^2C(CH_2OH)_2$ (hereinafter also referred to as "2,2-dialkyl-1,3-propanediol (s)"), such as neopentyl glycol (NPG); and diethylene glycol. Among these, preferred are CHDM and 2,2-dialkyl-1,3-propanediols (including NPG). In the 2,2-dialkyl-1,3-propanediols, $R^1$ and $R^2$ each represent an alkyl group (preferably an alkyl group having 1 to 6 carbon atoms). $R^1$ and $R^2$ may be the same or different alkyl groups.

Specific preferred examples of the modified PETs include copolyesters (polyester copolymers) using terephthalic acid as a dicarboxylic acid component, and EG as a main diol component and CHDM as a copolymerization diol component (hereinafter referred to as CHDM-copolymerized PETs or CHDM-modified PETs); copolyesters using neopentyl glycol (NPG) as the copolymerization diol component (hereinafter referred to as NPG-copolymerized PETs or NPG-modified PETs), and other copolyesters using a 2,2-dialkyl-1,3-propanediol as the copolymerization diol component (hereinafter referred to as 2,2-dialkyl-1,3-propanediol-modified PETs). The modified PETs may further contain diethylene glycol as a copolymerization component, for more excellent shrinkability at low temperatures.

In a modified PET, the copolymerization proportion of copolymerization components for modification is preferably 15 percent by mole or more (for example, 15 to 40 percent by mole), for optimizing the thermal deformation behavior of the modified PET and reducing delamination. The copolymerization proportion herein refers to the proportion of a copolymerized dicarboxylic acid component as a percentage of the total number of moles of the dicarboxylic acid component, or refers to the proportion of a copolymerized diol component as a percentage of the total number of moles of the diol component. Particularly, when the modified PET is, for example, a CHDM-copolymerized PET, the copolymerization proportion of CHDM is preferably 20 to 40 percent by mole, and more preferably 25 to 35 percent by mole, as a percentage of the total number of moles of the diol component (i.e., per 100 percent by mole of terephthalic acid). In other words, in this case, the proportion of EG is preferably 60 to 80 percent by mole, and more preferably 65 to 75 percent by mole, as a percentage of the total number of moles of the diol component. When the modified PET is a 2,2-dialkyl-1,3-propanediol-modified PET such as NPG-copolymerized PET, the copolymerization proportion of the 2,2-dialkyl-1,3-propanediol is preferably 15 to 40 percent by mole, i.e., the proportion of EG is preferably 60 to 85 percent by mole, as a percentage of the total number of moles of the diol component. In addition, part of the EG component may be substituted by diethylene glycol. The part of the EG component is preferably, 10 percent by mole or less, for example, 1 to 10 percent by mole.

The glass transition temperature (Tg) of the modified aromatic polyester resin is preferably in the range of 60°C to 80°C, and more preferably in the range of 60°C to 75°C. A modified aromatic polyester resin, when having a glass transition temperature (Tg) within the above-specified range, may show a thermal deformation behavior (change of shrinkage stress with temperature) similar to that of the polypropylene resin constituting the layer C; and this may reduce the difference in shrinkage stress between the layer A and the layer C occurring upon shrinking process to thereby further suppress delamination during shrinking process. A modified aromatic polyester resin, if having a glass transition temperature (Tg) of higher than 80°C, may cause the layer A to shrink abruptly at high temperatures upon shrinking process, and this may lead to a larger difference in shrinkage stress with respect to the layer C that gradually shrinks from relatively low temperatures to thereby cause delamination more often. The glass transition temperature (Tg) can be controlled by modifying the type of the polyester, the type of copolymerization component (modifying component) for modification, and/or the copolymerization proportion. The glass transition temperature (Tg) can be measured through differential scanning calorimetry (DSC).

The modified aromatic polyester resin is preferably a polyester resin that is substantially amorphous. Such an amorphous polyester enables extrusion at low temperatures, allows the layer A to have a flow behavior more similar to those of the layer B and the layer C to thereby improve the formability of the layers and to further suppress delamination during shrinking process. An aromatic polyester resin can be converted into an amorphous one through modification, because the aromatic polyester resin becomes resistant to crystallization as a result of modification in the above manner.

The degree of crystallinity of the modified aromatic polyester resin as measured through differential scanning calorimetry (DSC) (measured at a temperature elevation rate of 10°C per minute) is preferably 15% or less, more preferably 10% or less, and still more preferably substantially 0% in which substantially no melting point (melting peak) is observed when measured through DSC under the above condition. The degree of crystallinity can be determined by calculation from the heat of crystal fusion obtained through DSC measurement, with reference to a standard sample having a definite degree of crystallinity as measured typically through X-ray diffraction determination. The heat of crystal fusion can be determined typically in the following manner. Using a DSC (differential scanning calorimetry) system supplied by Seiko Instruments Inc., for example, nitrogen sealing is performed using a sample in an amount of 10 mg at a temperature elevation rate of 10°C per minute, the temperature is once elevated to the melting point or higher, dropped to ordinary temperature, and elevated again, and the area of a melting peak at this stage is measured to determine the heat of crystal fusion. The degree of crystallinity is desirably measured from a single resin. However, when the object polyester resin is present as a mixture of resins, the melting peak of the object polyester resin may be determined by subtracting the melting peak area of another resin component in the mixture from the measured melting peak area.

The weight-average molecular weight of the modified aromatic polyester resin is preferably 15000 to 90000, and more preferably 30000 to 80000, from the viewpoints of controlling the melting behavior and controlling the shrinkage. When the modified aromatic polyester resin is a 2,2-dialkyl-1,3-propanediol-modified PET, the weight-average molecular weight thereof is preferably 30000 to 80000, and more preferably 50000 to 70000.

The intrinsic viscosity (IV) of the modified aromatic polyester resin is preferably 0.70 (dl/g) or more, more preferably 0.70 to 0.90 (dl/g), and still more preferably 0.75 to 0.85 (dl/g), for the viewpoints of effective interlaminar bond strength.

The modified aromatic polyester resin can also be an existing article. Exemplary commercially available modified aromatic polyester resins include "EMBRACE 21214" (CHDM-modified PET) supplied by Eastman Chemical; "BELLPET MGG200" (2,2-dialkyl-1,3-propanediol-modified PET) supplied by Bell Polyester Products, Inc.; and "E-02" (NPG-modified PET) supplied also by Bell Polyester Products, Inc.

The content of the modified aromatic polyester resin is preferably 50 to 100 percent by weight, and more preferably 80 to 100 percent by weight, based on the total amount of the layer A, from the viewpoints of such as shrinkability (shrink percentage) and specific gravity.

Where necessary, the layer A may further contain one or more other additives such as lubricants, fillers, thermal stabilizers, antioxidants, ultraviolet-absorbers, antistatic agents, flame retardants, colorants, and pinning agents (alkaline earth metals).

[Layer B (Intermediate Layer)]

The layer(s) B (intermediate layer(s)) in the shrink film according to the present invention contains one or more ethylene-vinyl acetate resins as a main component. The ethylene-vinyl acetate resin is a resin (copolymer) which contains ethylene and vinyl acetate as essential monomer components. Specifically, the ethylene-vinyl acetate resin is a copolymer containing repeating units derived from ethylene, and repeating units derived from vinyl acetate. In addition to ethylene and vinyl acetate components, the ethylene-vinyl acetate resin may further contain one or more copolymerization components as monomer components within ranges not adversely affecting the advantageous effects of the present invention. Exemplary copolymerization components herein include vinyl monomers such as vinyl chloride; unsaturated carboxylic acids such as (meth)acrylic acids, maleic acid, fumaric acid, crotonic acid, itaconic acid, citraconic acid, and 5-norbornene-2,3-dicarboxylic acid; unsaturated carboxylic acid anhydrides such as maleic anhydride, citraconic anhydride, 5-norbornene-2,3-dicarboxylic anhydride, and tetrahydrophthalic anhydride; unsaturated carboxylic acid esters such as methyl (meth)acrylates, ethyl (meth)acrylates, propyl (meth)acrylates, butyl (meth)acrylates, 2-ethylhexyl (meth)acrylates, 2-hydroxyethyl (meth)acrylates, 3-hydroxypropyl (meth)acrylates, glycidyl (meth)acrylates, monoethyl maleate, and diethyl maleate; unsaturated amides or imides such as acrylamide, methacrylamide, and maleimide; and salts of unsaturated carboxylic acids, such as sodium (meth)acrylates and zinc (meth)acrylates. Each of different copolymerization components can be used alone or in combination.

The content of the ethylene-vinyl acetate resin is 50 percent by weight or more, preferably 70 to 100 percent by weight, more preferably 80 to 100 percent by weight, and still more preferably 90 to 100 percent by weight, based on the total weight of the layer B, for further satisfactory interlaminar bond strength and for further suppression of delamination.

Where necessary, the layer B may further include one or more ethylenic polyolefin resins. Exemplary ethylenic polyolefin resins include polyethylenes such as low-density polyethylenes (LDPEs), linear low-density polyethylenes (LLDPEs), ultralow-density polyethylenes, medium-density polyethylenes, and high-density polyethylenes (HDPEs); and ethylene/$\alpha$-olefin copolymers. Among them, preferred are linear low-density polyethylenes (LLDPEs). The content of the ethylenic polyolefin resins based on the total weight of the layer B is not critical, and these resins are usable for adjusting the content of vinyl acetate component in the layer B and controlling properties of the layer B.

The layer B may further contain, according to necessity, one or more other resins and/or one or more additives such as lubricants, fillers, thermal stabilizers, antioxidants, ultraviolet-absorbers, antistatic agents, flame retardants, petroleum resin, polymeric plasticizers, colorants, and pinning agents (alkaline earth metals).

The layer B in the shrink film according to the present invention may contain a recycled material within a range not adversely affecting advantageous effects of the present invention. In this case, the amount (content) of recycled material may be about 1 to 30 percent by weight based on the total weight of the layer B. As used herein the term "recycled material" refers to a recycling material including non-product portions such as film residues upstream and downstream from product films, and film edges; and film scraps and polymer scraps, such as residual portions of intermediate products from which product films have been cut, and substandard articles. It should be noted, however, the recycled material for use herein should be one formed through the production of shrink film according to the present invention (so-called article recycled from itself).

The content of the vinyl acetate component in the layer B is 20 to 30 percent by weight, and preferably 25 to 30 percent by weight. With an increasing content, the vinyl acetate component interacts with the polyester resin to a higher extent to improve the adhesion. However, the layer B, if containing the vinyl acetate component in an excessively high content, may tend to be gelled upon extrusion. The layer B, if having a content of vinyl acetate component of less than 20%, may show insufficient adhesion with the layer A and tackiness due to less amounts of polar groups, and the resulting shrink film may tend to suffer from delamination during shrinking process. In contrast, the layer B, if having a vinyl acetate content of more than 30%, may cause insufficient workability, because vinyl acetate in such an excessively high content may decompose to form an acid at a temperature at which melting and extrusion of the aromatic polyester resin and polypropylene resin is performed, and the formed acid may further accelerate the decomposition to form a crosslinked structure, and the resin composition for the layer B may become susceptible to gelation, and this may cause unmolten substances or cause the layer B to have an excessively high melt flow rate (MFR). The vinyl acetate component is contained in the layer B as a monomer component of the ethylene-vinyl acetate resin, i.e., as a repeating unit in the ethylene-vinyl acetate resin; and the content of vinyl acetate component is determined as the product of the "content (percent by weight) of the ethylene-vinyl acetate resin in the layer B" and the "content (percent by weight) of vinyl acetate component in the ethylene-vinyl acetate resin". More specifically, the content of vinyl acetate component is determined according to the following equation:

$$\text{Content of vinyl acetate component (percent by weight)}$$

$$= \text{[Content of ethylene-vinyl acetate resin in the layer B}$$

$$\text{(percent by weight)]} \times \text{[Content of vinyl acetate component}$$

$$\text{in ethylene-vinyl acetate resin (percent by weight)]} \times 1/100$$

Though not critical, the content of ethylene component in the layer B is preferably 70 to 80 percent by weight, and more preferably 70 to 75 percent by weight. The layer B, if having a content of ethylene component of more than 80%, may show insufficient adhesion with the polyester resin. In contrast, the layer B, if having a content of ethylene component of less than 70%, may be fragile, and whose vinyl acetate component may become more susceptible to decomposition to cause crosslinking.

Exemplary techniques for controlling the content of vinyl acetate component in the layer B within the above-specified range include, but are not limited to, (i) a technique of forming the layer B from an ethylene-vinyl acetate resin having a content of vinyl acetate component of 20 to 30 percent by weight alone; (ii) a technique of blending two or more ethylene-vinyl acetate resins having different contents of vinyl acetate component so as to adjust the vinyl acetate content in the layer B; and (iii) a technique of blending an ethylene-vinyl acetate resin with an ethylenic olefin resin (e.g., a polyethylene) to adjust the vinyl acetate content in the layer B. Among these techniques, the technique (i) is particularly preferred for further satisfactory extrusion moldability.

The loss tangent (tan $\delta$) of the layer B (resin composition constituting the layer B) as determined through a dynamic viscoelasticity measurement varies depending on the temperature (tan $\delta$ versus temperature curve, this curve is hereinafter also referred to as a "dynamic viscoelasticity curve") preferably such that tan $\delta$ rises from less than 1 to 1 or more (i.e., rises and passes through 1) at a temperature in the range of from 70°C to 90°C. Hereinafter the temperature at which tan $\delta$ rises and passes through 1 (turning point from less than 1 to 1 or more) within measurement temperatures from ordinary temperature (30°C) to 120°C is referred to as "T(tan $\delta \geq 1$)". T(tan $\delta \geq 1$) is preferably in the range of 70°C to 90°C, and more preferably in the range of 75°C to 85°C. The temperature T(tan $\delta \geq 1$) is an index to the temperature at which the layer B softens to such an extent as to follow shrinkage sufficiently. Though not limited, the shrink film and shrink label according to the present invention are preferably subjected to shrinking process at such a temperature that the film temperature falls within the range of about 70°C to about 90°C. This is because a film, if shrinks at a temperature lower than 70°C, may suffer from large natural shrinkage or may suffer from blocking when used at elevated temperatures; and in contrast, a shrinking process, if performed at a film temperature of higher than 90°C, may cause deformation of a plastic container and/or deterioration of contents in a container. When T(tan $\delta \geq 1$) is within the above-specified range and a shrinking process is performed at such a temperature that the film temperature falls within the range of about 70°C to 90°C, the layer B has adequate flowability (fluidity), can thereby satisfactorily follow or fit the shrinkage of the layer A and the layer C, and shows effective adhesiveness with these layers (interlaminar adhesion). If T(tan $\delta \geq 1$) exceeds 90°C, the layer B may not have sufficient flowability at the shrinking process temperature, thereby may not sufficiently follow deformation of the layer A and the layer C, and may be susceptible to delamination. In contrast, if T(tan $\delta \geq 1$) is less than 70°C, the layer B may have excessively high flowability to fail to maintain its shape as a layer at the shrinking process temperature. The control of T(tan $\delta \geq 1$) is facilitated by controlling the content of vinyl acetate component in the layer B within the range of 20 to 30 percent by weight.

The temperature T(tan $\delta \geq 1$) can be determined through a dynamic viscoelasticity measurement. Specifically, how tan $\delta$ varies depending on temperature is determined as a dynamic viscoelasticity curve through the dynamic viscoelasticity measurement, and a temperature at which tan $\delta$ rises from less than 1 to 1 or more (i.e., a temperature at which tan $\delta$ is 1) is determined in the dynamic viscoelasticity curve, and this temperature is defined as T(tan $\delta \geq 1$). The dynamic viscoelasticity measurement is performed under conditions of a frequency of 1 Hz, at a temperature elevation rate of 2°C per minute, and measurement temperatures of from ordinary temperature (30°C) to 120°C. An analyzer (evaluation apparatus) for use herein may be, for example, "EXSTAR6000 DMS6100" supplied by Seiko Instruments Inc.

The melt flow rate (MFR; melt flow index) of the ethylene-vinyl acetate copolymer for use herein is preferably 1 to 10 grams per 10 minutes, and more preferably 1 to 5 grams per 10 minutes, for further excellent processing suitability. The melt flow rate (MFR) herein is measured at a temperature of 190°C under a load of 2.16 kg in accordance with Japanese Industrial Standards (JIS) K6730 (1981).

The melt flow rate (MFR) of the layer B (resin composition constituting the Layer B) herein is preferably 1 to 10 grams per 10 minutes, and more preferably 1 to 5 grams per 10 minutes, for further excellent processing suitability. The melt flow rate (MFR) herein is also measured at a temperature of 190°C under a load of 2.16 kg in accordance with JIS K6730 (1981).

[Layer C (Polypropylene Resin Layer)]

The layer C in the shrink film according to the present invention contains one or more polypropylene resins as a main component. The polypropylene resin is not limited, as long as being a polymer containing propylene as a constitutional monomer, and can be either a propylene homopolymer or a copolymer containing a copolymerization component such as an $\alpha$-olefin (propylene-$\alpha$-olefin copolymer). Preferably, such polypropylene resins, preferred are polypropylenes prepared through polymerization in the presence of a metallocene catalyst (metallocene-catalyzed polypropylenes) and propylene-$\alpha$-olefin random copolymers. Each of different polypropylene resins can be used alone or in combination.

Exemplary $\alpha$-olefins for use as copolymerization components in the propylene-$\alpha$-olefin copolymers include ethylene; and $\alpha$-olefins having about 4 to about 20 carbon atoms, such as 1-butene, 1-pentene, 4-methyl-1-pentene, 1-hexene, 1-heptene, 1-octene, 1-nonene, and 1-decene. Each of different copolymerization components can be used alone or in combination. Among such propylene-$\alpha$-olefin copolymers, ethylene-propylene random copolymers using ethylene as a copolymerization component are especially preferred. In the ethylene-propylene random copolymers, the ratio (by weight) of ethylene to propylene can be selected within the range of from about 2:98 to about 5:95, and preferably from about 3:97 to about 4.5:95.5.

Preferably, the ethylene-propylene random copolymers are copolymers copolymerized in the presence of a metallocene catalyst, for allowing the shrink film to have further excellent shrinkability at low temperatures of about 60°C to about 80°C and to have further higher fittability to a container upon thermal shrinkage. Those having isotactic indices of 90% or more are preferred for further excellent shrinkability at low temperatures and further satisfactory toughness of the film. The metallocene catalyst can be a known or common metallocene catalyst adopted to polymerization of olefins. A process for the copolymerization is not limited and can be selected, for example, from known polymerization processes such as slurry polymerization, solution polymerization, and vapor phase polymerization.

The polypropylene resins are available as commercial products such as "WINTEC WFX6" (metallocene-catalyzed polypropylene) from Japan Polypropylene Corporation, "ZELAS #7000" and "ZELAS #5000" (both propylene-$\alpha$-olefin copolymers) from Mitsubishi Chemical Corporation, and "KERNEL" from Japan Polyethylene Corporation.

The weight-average molecular weight of the polypropylene resin is preferably 100,000 to 500,000, and more preferably 200,000 to 400,000, for controlling the melting behavior within a preferred range.

The melting point of the polypropylene resin is preferably 100°C to 150°C, and more preferably 120°C to 140°C. The melt flow rate (MFR) (at a temperature of 230°C under a load of 2.16 kg) of the polypropylene resin is preferably 0.1 to 10 grams per 10 minutes, and more preferably 1 to 5 grams per 10 minutes, for controlling the melting behavior. A polypropylene resin, if having a melting point and/or MFR deviating from the above-specified range, should be formed into the layer C under significantly different conditions from those of the resin for forming the layer A; this may impede the formation of a sheet including these layers through coextrusion and/or may impede subsequent drawing of the sheet to form a film; whereby the shrink film may suffer from film breakage and other problems to cause inferior productivity, or the shrink film may shrink unsatisfactorily because of insufficient orientation.

The content of the polypropylene resin for use herein is 40 percent by weight or more, preferably 50 to 100 percent by weight, and more preferably 55 to 95 percent by weight, based on the total weight of the layer C. The layer C, if having a content of the polyolefin resin of less than 40 percent by weight, may fail to have a low specific gravity and/or may have insufficient shrinkability.

The layer C may further contain one or more polyethylenes to prevent film tearing and to improve workability. The polyethylenes are not especially limited and can be any of known or common polyethylenes. Exemplary polyethylenes herein include low-density polyethylenes (LDPEs), linear low-density polyethylenes (LLDPEs), ultralow-density polyethylenes, medium-density polyethylenes, and high-density polyethylenes (HDPEs). Among these, low-density polyethylenes having a density of less than 0.930 (g/cm$^3$) (including linear low-density polyethylenes and ultralow-density polyethylenes) are preferred, linear low-density polyethylenes are more preferred, and linear low-density polyethylenes polymerized in the presence of a metallocene catalyst (metallocene-catalyzed LLDPEs) are most preferred. The polyethylenes for use herein may be commercially available products such as LLDPE "2040FC" from Ube-Maruzen Polyethylene Co., Ltd.; "KERNEL KF380", "KERNEL KF260T", and "KERNEL KS340T" from Japan Polyethylene Corporation; and "Evolue SP2040" from Prime Polymer Co., Ltd.

The content of the polyethylene is preferably 1 to 10 percent by weight, and more preferably 1 to 5 percent by weight, based on the total weight of the layer C.

The layer C contains one or more polymeric plasticizers for more satisfactory shrinkability. Exemplary polymeric plasticizers include rosin resins such as rosins, polymerized rosins, hydrogenated rosins, and derivatives of them, and resin acid dimers; terpene resins such as terpene resins, aromatic-modified terpene resins, hydrogenated terpene resins, and terpene-phenol resins; and petroleum resins such as aliphatic, aromatic, and alicyclic petroleum resins. Among them, petroleum resins are preferred. Each of different polymeric plasticizers can be used alone or in combination. The amount of the polymeric plasticizer is preferably 5 to 30 percent by weight, and more preferably 10 to 25 percent by weight, based on the total weight of the layer C. A polymeric plasticizer, if used in an amount exceeding 30 percent by weight, may cause the shrink film to be fragile. In contrast, a polymeric plasticizer, if used in an amount of less than 5 percent by weight, may not exhibit sufficient effects. The polymeric plasticizers are available as commercial products such as "ARKON" from Arakawa Chemical Industries, Ltd.; "Clearon" from Yasuhara Chemical Co., Ltd.; and "I-MARV" from Idemitsu Kosan Co., Ltd.

The layer C in the shrink film according to the present invention may contain a recycled material within a range not adversely affecting advantageous effects of the present invention. In this case, the amount of the recycled material is about 1 to 75 percent by weight, and preferably 1 percent by weight or more and less than 50 percent by weight, based on the total weight of the layer C. As used herein the term "recycled material" refers to a recycling material including non-product portions such as films residues upstream and downstream from product films, and film edges; and film scraps and polymer scraps, such as residual portions of intermediate products from which product films have been cut, and substandard articles. It should be noted, however, the recycled material for use herein should be one formed through the production of shrink film according to the present invention (so-called article recycled from itself).

The layer C may contain one or more modified aromatic polyester resins. Particularly, the layer C, when containing a recycled material as mentioned above, contains the modified aromatic polyester resin derived from the layer A component. With an increasing content of recycled material in the layer C, namely, with an increasing content of the modified aromatic polyester resin in the layer C, the layer C tends to be more advantageous in cost. However, the present inventors have found that if the layer C has a content of the modified aromatic polyester resin of 20 percent by weight or more and a print is applied to the backside of the shrink film, the layer C causes dullness in color of the print, and, as a result, the print looks unsharp. The present inventors have further found that the change in color can be resolved by incorporating a specific amount of a modified aromatic polyester resin also to the layer B.

Specifically, when the content of modified aromatic polyester resin in the layer C is 20 to 40 percent by weight (more preferably 20 to 30 percent by weight), the layer B preferably contains a modified aromatic polyester resin in a content of 5 to 15 percent by weight (more preferably 6 to 10 percent by weight). The layer C, if having a content of the modified aromatic polyester resin of less than 20 percent by weight, may not cause deterioration (dullness) in color; and the layer C, if having a content of the modified aromatic polyester resin exceeding 40 percent by weight, may become cloudy. The layer B, if having a content of the modified aromatic polyester resin of less than 5 percent by weight, may not act effectively to improve the color; and the layer B, if having a content of the modified aromatic polyester resin exceeding 15 percent by weight, may become cloudy. Such modified aromatic polyester resin contained in the layer B is preferably identical to the modified aromatic polyester resin contained in the layer A. The modified aromatic polyester resin is generally preferably one contained as a recycled material.

When the layer C has a content of the modified aromatic polyester resin of 20 to 40 percent by weight (more preferably 20 to 30 percent by weight), the layer B preferably contains a polypropylene resin in a content of 1 to 8 percent by weight (more preferably 3 to 6 percent by weight) as to resolve the color change. The layer B, if having a polypropylene resin content of less than 1 percent by weight, may not effectively contribute to improvement in color; and the layer B, if having a polypropylene resin content exceeding 8 percent by weight, may become cloudy. Above all, the polypropylene resin in the layer B is preferably identical to the polypropylene resin contained in the layer C. The polypropylene resin is generally preferably one contained as a recycled material.

The layer B preferably contains both a modified aromatic polyester resin and a polypropylene resin. In this case, the content of the modified aromatic polyester resin is preferably in the range of 5 to 15 percent by weight, and the content of the polypropylene resin is preferably in the range of 1 to 8 percent by weight.

When the layer C contains a polyethylene in addition to the polypropylene resin, the layer B preferably contains a polypropylene resin and a polyethylene identical to those in the layer C, and more preferably contains the polypropylene resin and the polyethylene identical to those in the layer C as a resin mixture having the same composition (formulation) as in the layer C.

When the layer C contains a polyethylene and a tackifier resin in addition to the polypropylene resin, the layer B preferably contains a polypropylene resin, a polyethylene, and a polymeric plasticizer identical to those in the layer C, and more preferably contains the polypropylene resin, polyethylene, and polymeric plasticizer identical to those in the layer C as a resin mixture having the same composition (formulation) as in the layer C.

The dullness in color is probably caused by interlaminar disarray (interfacial turbulence) due to increase in reflectance of the shrink film at wavelengths of 400 to 500 nm. In this case, the dullness in color may be resolved by incorporating a modified aromatic polyester resin and/or a polypropylene resin into the layer B, probably because interlaminar uniformity (interfacial uniformity) increases.

The effects of resolving the dullness in color can be obtained in any multilayer structure, such as the multilayer structure of five layers composed of three different components: (layer A)/(layer B)/(layer C)/(layer B)/(layer A) and the multilayer structure of three layers composed of three different components: (layer A)/(layer B)/(layer C).

[Shrink Films]

The shrink film according to the present invention has a multilayer structure including at least three layers composed of three different components, i.e., the layers A, B, and C in this order [(layer A)/(layer B)/(layer C)] without the interposition of any other layer, as described above. The multilayer structure is preferably a five-layer multilayer structure composed of three different components typically in the order of A/B/C/B/A.

The multilayer structure (such as the five-layer multilayer structure composed of three different components in the order of A/B/C/B/A) is formed through coextrusion. The coextrusion is generally performed according to a procedure in which resin compositions A, B, and C are fed to extruders set at predetermined temperatures, respectively, and coextruded typically through a T-die or circular die. In this procedure, the coextrusion is preferably performed using a manifold or feed block to give a predetermined multilayer structure. Where necessary, the feed amounts of the resin compositions may be adjusted using gear pumps. Additionally, it is desirable to remove foreign matter using a filter, to suppress film breakage. Though varying on the types of the resin compositions A, B, and C used and being not critical, the molding temperatures of the respective resin compositions are preferably close to one another. Namely, the extrusion temperatures of the respective layers are preferably close to one another. Specifically, the extrusion temperature of the resin composition A (layer A) is preferably 200°C to 240°C; the extrusion temperature of the resin composition B (layer B) is preferably 180°C to 220°C; and the extrusion temperature of the resin composition C (layer C) is preferably 190°C to 220°C. The temperature of a section where the respective resin compositions meet one another and the temperature of the die are preferably 200°C to 220°C. The coextruded laminate of polymers is quenched typically on a cooling drum and thereby yields an unstretched multilayer film (sheet).

The shrink film according to the present invention is preferably a uniaxially or biaxially oriented film for further satisfactory shrinkability. More preferably, all the layers A, B, and C in the film are oriented. A shrink film, if being an unoriented film, may fail to show good shrinkability without problems. Though not critical and can be any orientation such as uniaxial orientation or biaxial orientation, the orientation is preferably performed highly in a film transverse direction (a direction to be a circumferential direction of a label when the label is rolled into a cylinder). Specifically, a film that has been substantially uniaxially oriented in the transverse direction is preferred. The shrink film may also be a film that has been highly oriented in a machine direction (a direction perpendicular to the transverse direction), namely, substantially uniaxially oriented in the machine direction.

Such an oriented film (e.g., uniaxially oriented or biaxially oriented film) can be prepared by drawing an unstretched multilayer film (sheet). The drawing process can be chosen according to the desired orientation and may be biaxial drawing in a machine direction (longitudinal direction; MD) and a transverse direction (cross direction; TD) or uniaxial drawing in the machine or transverse direction. The drawing procedure can be any of drawing using a roll, drawing using a tenter, and drawing using a tube. Though drawing conditions vary depending typically on the types of the resin compositions A, B, and C used and are not critical, the drawing is preferably performed at a temperature of generally 70°C to 110°C, and preferably 80°C to 95°C, at a draw ratio of about 2 to about 8 folds in at least one of the machine direction and transverse direction. For example, it is desirable to draw the film to a draw ratio of about 1 to 1.5 folds (preferably about 1 to about 1.3 folds) in the machine direction, followed by stretching to a draw ratio of about 2 to about 6 folds (preferably about 3 to about 5.5 folds, and more preferably about 4 to about 5 folds) in the transverse direction.

Though not critical, the thickness of each layer A (as a single layer) in the shrink film according to the present invention is preferably 3 to 15 $\mu$m, and more preferably 5 to 10 $\mu$m. The layer A, if having a thickness exceeding 15 $\mu$m, may have an excessively high shrinkage stress to fail to suppress delamination during shrinking process or may shrink abruptly to impair the finish quality of the film. In contrast, the layer A, if having a thickness of less than 3 $\mu$m, may cause the shrink film to shrink insufficiently and/or to show insufficient toughness.

Though not critical, the thickness of each layer B (as a single layer) in the shrink film according to the present invention is preferably 0.5 to 10 $\mu$m, and more preferably 1 to 8 $\mu$m. The layer B, if having a thickness exceeding 10 $\mu$m, may cause the film to show insufficient toughness. In contrast, the layer B, if having a thickness of less than 0.5 $\mu$m, may show an insufficient adhesive strength (adhesion).

Though not critical, the thickness of the layer C (as a single layer) in the shrink film according to the present invention is preferably 10 to 70 $\mu$m, and more preferably 15 to 50 $\mu$m. The layer C, if having a thickness exceeding 70$\mu$m, may cause the shrink film to have a lower shrink percentage. In contrast, the layer C, if having a thickness of less than 10 $\mu$m, may show an excessively large difference in shrinkage stress with respect to the layer A, to fail to suppress delamination during shrinking process and/or may shrink abruptly to cause poor finish quality.

The percentage of the thickness of the layer(s) A (total thickness of the layer(s) A) to the thickness of the layer C (100%) in the shrink film according to the present invention is preferably 40% to 150%, and more preferably 60% to 100%. If the total thickness of the layers A is excessively small relative to the thickness of the layer C, the shrink film may shrink insufficiently (may have an insufficient shrink percentage) and/or may have an insufficient toughness to show poor workability. In contrast, if the total thickness of the layers A is excessively large relative to the thickness of the layer C, the layers A may have an increased shrinkage stress to thereby have an excessively large difference in shrinkage stress with respect to the layer C to thereby fail to suppress delamination even the shrink film has the layer(s) B. In this connection, the shrink film according to the present invention has the layer(s) B and thereby advantageously suppresses delamination, shows both satisfactory shrinkability and toughness, and further shows a satisfactory interlaminar bond strength, even when the total thickness of the layers A is relatively large with respect to the thickness of the layer C.

The percentage of the thickness of the layer(s) B (total thickness of the layers B) to the thickness of the layer C (100%) in the shrink film according to the present invention is preferably 10% to 100%, and more preferably 20% to 50%. If the total thickness of the layers B is excessively small relative to the thickness of the layer C, the shrink film may have an insufficient interlaminar bond strength. In contrast, if the total thickness of the layers B is excessively large relative to the thickness of the layer C, the resulting shrink film or shrink label may have insufficient toughness.

Though not critical, the total thickness of the shrink film according to the present invention is preferably 20 to 100 $\mu$m, more preferably 20 to 80 $\mu$m, and still more preferably 20 to 50 $\mu$m

The layer(s) A in the shrink film according to the present invention contains an aromatic polyester resin selected from a CHDM-modified PET and a 2,2-dialkyl-1,3-propane diol-modified PET as a main component, is thereby highly shrinkable to improve shrinkability of the shrink film to have a higher shrink percentage and higher shrinkage stress. Thus, the shrink film is capable of fitting around containers satisfactorily and has good finish quality. Additionally, the layer(s) A, as having high rigidity, contributes to higher toughness of the shrink film, helps the cylindrical shrink label to fit around containers satisfactorily without troubles such as "buckling". The layers A, when used as surface layers, help the film to have further satisfactory printability, abrasion resistance, and chemical resistance on surface. The layer C contains a polypropylene resin as a main component, thereby helps the shrink label to have a low specific gravity. In addition, the layer C helps the shrink label to shrink not abruptly but gradually (to show a gentle shrinkage behavior) to thereby have higher handleability upon shrinking process. The shrink film according to the present invention, as having a laminate structure including the layer A and the layer C, excels both in shrinkability and workability and further has satisfactory properties such as low specific gravity, high toughness, and good printability simultaneously.

However, the aromatic polyester resin constituting the layer A largely differs in heat shrinkage behavior and heat shrinkage stress from the polypropylene resin constituting the layer C. Namely, the polyester resin shows a larger shrinkage stress than that of the aromatic polyester resin. Accordingly, when subjected to thermal shrink (shrink) processing, the layer A and the layer C shrink in different behaviors from each other, and this often causes delamination between the two layers. This phenomenon particularly significantly occurs in a center-sealed portion when the shrink film is adopted to a cylindrical shrink label. This is probably because, in the center-sealed portion, one of the two surfaces is fixed through center sealing, and thereby the shrinkage of the surface resin layer of the other surface not fixed affects more significantly. A technique of providing an adhesive layer between the layer A and the layer C to improve the strength between these layers is generally known. Even according to this technique, however, there has been provided no shrink film which is sufficiently prevented from delamination in a center-sealed portion after shrinking process.

In contrast, the shrink film according to the present invention uses an ethylene-vinyl acetate resin as a main component of an intermediate layer (layer B) and further controls the content of vinyl acetate component in the layer B within a specific range. The ethylene-vinyl acetate resin shows relatively satisfactory thermal stability even at temperatures of 200°C or higher during the coextrusion of the aromatic polyester resin and the polypropylene resin. Specifically, problems such as oxidation, molecular weight reduction, crosslinking, gelation, coloring, and off-flavor can be prevented during the coextrusion under such conditions. The ethylene-vinyl acetate resin also has satisfactory extrusion suitability and shows a satisfactory viscoelastic behavior while maintaining polarity. In addition, by controlling the content of vinyl acetate component in the layer B within the specific range, the resin constituting the layer B exhibits satisfactory adhesive strengths both to the aromatic polyester resin (especially PET resin) and to the polypropylene resin and exhibits excellent extrusion workability at temperatures for the extrusion of the two resins. Accordingly, the shrink film according to the present invention, through having a laminate system of the layer A and the layer C, excels all in extrusion suitability, interlaminar bond strength, and prevention of delamination during shrinking process.

By controlling the layer B to have a T(tan $\delta \geq 1$) within the above-specified range in addition to controlling the content of the vinyl acetate component within the above specified range, the layer B shows further excellent adhesion with the layers A and C and, in addition, has adequate flowability at such a shrinking process temperature to give a film temperature of about 70°C to 90°C, and can thereby follow or fit satisfactorily shrinkage of the layers A and C. This further suppresses delamination during shrinking process. The layer B, if following the shrinkage insufficiently, may cause delamination particularly in a center-sealed portion due typically to the difference in shrinkage quantity between the layer A and the layer B during shrinking process.

Additionally, the layer A herein shows higher adhesion with the layer B, because the layer A uses a modified aromatic polyester resin selected from a CHDM-modified PET and a 2,2-dialkyl-1,3-propanediol-modified PET as an aromatic polyester resin, in which part of its components is modified; thereby the modified polyester resin is substantially amorphous, and can satisfactorily form a layer (layer A) upon extrusion. More preferably, a modified aromatic polyester resin having a specific glass transition temperature (Tg) is chosen from among such modified aromatic polyester resins. This modified aromatic polyester resin starts to thermally shrink and deform at a relatively low temperature, thereby behaves upon thermal shrinkage in a manner similar to that of the polypropylene resin, and helps to further suppress delamination.

[Shrink Label (Cylindrical Shrink Label)]

The shrink film according to the present invention is preferably adopted to a shrink label by providing a printed layer on at least one side of the shrink film as a base material. In addition to the printed layer, the shrink label may further include one or more other layers including resin layers and coating layers, such as protective layers, anchor coating layers, primer coating layers, and adhesive layers (e.g., pressure-sensitive adhesive layers and heat-sensitive adhesive layers). The shrink label may further include a layer made from a nonwoven fabric or paper. Preferred examples of the layer structure of the shrink label according to the present invention include the layer structure of (printed layer)/A/B/C/B/A; and the layer structure of (printed layer)/A/B/C/B/A/(printed layer). The shrink film according to the present invention in itself can be used also as a shrink label without providing a printed layer.

The shrink label according to the present invention has a printed layer on at least one surface. The printed layer is a layer which indicates, for example, trade names (product names), illustrations, and/or precautions. The printed layer is formed by the application of a printing ink. The application is preferably performed through off-line coating in which the printing ink is applied according to a known or common printing technique after the film formation, from the viewpoints typically of productivity and workability. The printing technique can be any of common techniques, of which gravure printing or flexographic printing is most preferred. The printing ink for use in the formation of the printed layer contains, for example, a pigment, a binder resin, a solvent, and other additives. Exemplary binder resins for use herein include, but are not limited to, resins such as acrylic resins, urethane resins, polyamide resins, vinyl chloride-vinyl acetate copolymers, cellulosic resins, and nitrocellulose resins. Each of these binder resins can be used alone or in combination. The pigments for use herein can be chosen according to the intended use from among coloring pigments including white pigments such as titanium oxide (titanium dioxide); cyan (blue) pigments such as copper phthalocyanine blue; carbon blacks; aluminum flake; and mica. Additionally, extender pigments are usable as the pigment for the purpose typically of gloss adjustment. Exemplary extender pigments include alumina, calcium carbonate, barium sulfate, silica, and acrylic beads. Examples of the solvents include commonly used solvents including organic solvents such as toluene, xylenes, methyl ethyl ketone, ethyl acetate, methyl alcohol, ethyl alcohol, and isopropyl alcohol; and water.

Though not critical, the printed layer may be a resin layer curable by the action of active energy rays such as visible rays, ultraviolet rays, and electron beams. This is effective typically for preventing the film from deformation due to excess heat. For instance, curing by the action of an ultraviolet ray may be performed by applying an ultraviolet ray (or near-ultraviolet ray) with a wavelength of 300 to 460 nm under conditions of an irradiation intensity of 150 to 1000 $mJ/cm^2$ for an irradiation time of about 0.1 to 3 seconds typically with an ultraviolet-ray (UV) lamp, ultraviolet light emitting diode (LED), or ultraviolet laser. When the printed layer is one curable by the action of active energy rays, the printing ink preferably further contains one or more photoinitiators (photopolymerization initiators) such as photo-initiated radical polymerization initiators and photo-initiated cationic polymerization initiators, in addition to the above components. Exemplary photo-initiated radical polymerization initiators include benzophenones, thioxanthones, acetophenones, and acylphosphines polymerization initiators; and exemplary photo-initiated cationic polymerization initiators include diazonium salts, diaryliodonium salts, triarylsulfonium salts, silanol/aluminum complexes, sulfonic acid esters, and imide sulfonates. Though not critical, the content of the photoinitiator is preferably 0.5 to 7 percent by weight, and more preferably 1 to 5 percent by weight, based on the total weight of the printing ink. The printing ink may further contain one or more sensitizers according to necessity for yielding higher production efficiency. Exemplary sensitizers for use herein include amine sensitizers such as aliphatic amines, aromatic amines, and cyclic amines containing nitrogen in the ring (e.g., piperidine); urea sensitizers such as allylurea and o-tolylthiourea; sulfur compound sensitizers such as sodium diethyldithiophosphate; anthracene sensitizers; nitrile sensitizers such as N,N-disubstituted p-aminobenzonitrile compounds; phosphorus compound sensitizers such as tri-n-butylphosphine; nitrogen compound sensitizers such as N-nitrosohydroxylamine derivatives and oxazolidine compounds; and chlorine compound sensitizers such as carbon tetrachloride. Though not critical, the content of the sensitizer is preferably 0.1 to 5 percent by weight, and particularly preferably 0.3 to 3 percent by weight, based on the total weight of the printing ink.

Though not critical, the thickness of the printed layer is, for example, about 0.1 to about 10 $\mu$m. A printed layer having a thickness of less than 0.1 $\mu$m may be difficult to form uniformly, and the resulting printed layer may suffer from, for example, partial "grazing (poor print quality)" to have poor decorativeness and/or may fail to be printed as designed. In contrast, a printed layer having a thickness exceeding 10 $\mu$m may consume a large amount of the printing ink to cause higher cost, or it may be difficult to apply the printing ink uniformly to form such a thick printed layer, or the resulting printed layer becomes fragile to be easily peeled off. In addition, the printed layer may have higher rigidity to be resistant to follow the shrinkage of the film during shrink processing.

The shrink label according to the present invention is usable typically as a cylindrical label (sleeve label) or a rolled stick-on label. The cylindrical label is prepared by sealing both ends of the label with a solvent or adhesive to be cylindrical and is fitted around a container. The rolled stick-on label is used so that one end of the label is affixed to a container, the label is then wound around the container, and the other end of the label is laid on the one end to allow the label to be cylindrical. The shrink label according to the present invention is particularly preferably adopted as a cylindrical shrink label among these labels, because the present invention is most advantageous for suppressing delamination in a center-sealed portion when the cylindrical label is fitted around a container (delamination during fitting).

[Properties of Shrink Film]

The interlaminar bond strengths of the shrink film according to the present invention before shrinking process are preferably 0.7 (newtons per 15 mm; N/15-mm) or more, and more preferably 1.5 (N/15-mm) or more, for maintaining satisfactory properties as a multilayer film. A shrink film, if having an interlaminar bond strength of less than 0.7 (N/15-mm), may suffer from delamination between film layers to thereby have lower productivity and to suffer from quality problems during working process such as printing or bag-making process. As used herein the interlaminar bond strength refers to a strength between a pair of layers which shows the lowest interlaminar bond strength among the layers in the shrink film. The interlaminar bond strength is measured in a T-peel test performed in accordance with JIS K 6854-3 at a tensile speed of 200 mm per minute.

The thermal shrink percentage of the shrink film according to the present invention (before shrinking process) is preferably 35% or more, more preferably 35% to 80%, and still more preferably 40% to 80%, as determined in a main orientation direction (direction in which drawing is mainly performed) in a treatment with hot water at 90°C for 10 seconds. A shrink film, if having a thermal shrink percentage of less than the above-specified range and adopted to a shrink label, may not sufficiently shrink in a process of applying heat to the label to bring the label to be in intimate contact with the container, may thereby hardly fit to dimensions of the container, and may show inferior finish quality especialy when applied to a container having a complicated shape.

When the shrink film according to the present invention is a film which has been mainly uniaxially stretched (oriented), the thermal shrink percentage of the film (before shrinking process) in a direction (direction to which little or no drawing is applied) perpendicular to the main orientation direction is preferably -5% to 10% in a treatment with hot water at 90°C for 10 seconds.

The transparency (clarity) (haze: JIS K 7105, in terms of 40 $\mu$m thick) (in units of %) of the shrink film according to the present invention is preferably less than 15, more preferably less than 5.0, and still more preferably less than 2.0. If a shrink film having a haze of 15 or more is used in a shrink label by applying a print to an inner side (a side to face a container when the label is attached to the container) of the shrink film, the print may look hazed and the shrink label may have poor decorativeness when the print is seen through the film. However, such a shrink film having a haze of 15 or more is sufficiently usable in other applications than the above one in which the print is to be seen through the film.

[Processing of Cylindrical Shrink Label]

Though not limited, a cylindrical shrink label using the shrink film according to the present invention can be produced, for example, in the following manner. Initially, a long shrink film which has been drawn in a transverse direction is prepared, a print is applied to the long shrink film, the film bearing the print is slit to predetermined widths, wound to give rolls each including multiple shrink labels in series in a machine direction, and the rolls are subjected to processing. Next, while being unwound, one of the rolls is formed into a cylinder so that the main drawing direction (e.g., transverse direction) of the shrink film stands a circumferential direction of the resulting cylindrical label. Specifically, the long shrink label is formed into a cylinder, and a solvent (e.g., 1,3-dioxolane or tetrahydrofuran (THF)) and/or an adhesive (hereinafter these components are referred to as a "solvent or another component") is applied in a strip about 2 to about 4 mm wide in a machine direction to an inner surface of one lateral end of the label. The label is then rolled into a cylinder so that the portion to which the solvent or another component is applied overlaps the outer surface of the other lateral end of the label in a position of 5 to 10 mm inside from the other lateral end, affixed and adhered (center-sealed). Thus, a long cylindrical continuous shrink label (long cylindrical shrink label) is obtained. When perforations for tearing the label are to be provided, perforations with predetermined lengths at predetermined intervals (pitches) are formed in a machine direction of the label. The perforations can be arranged according to a common procedure. They can be arranged, for example, by pressing a disk-like blade peripherally having cutting edges and non-cutting portions alternately, or by using laser beams. The step of arranging perforations can be carried out as appropriate in a suitable stage, such as after the printing step, or before or after the step of processing the label to form a cylindrical label.

The cylindrical shrink label preferably has a center-sealing strength of 2 N/15-mm or more. A cylindrical shrink label, if having a center-sealing strength of less than 2 N/15-mm, may suffer from peeling off at the sealed portion after processing or after being formed into a product, and this may cause the label to have inferior productivity and/or to be left out from the container.

The shrink label according to the present invention is applied to a container to form a container with the label.

Exemplary containers herein include soft drink bottles such as PET bottles; home-delivered milk containers; containers for foodstuffs such as seasonings; alcoholic drink bottles; containers for pharmaceutical preparations; containers for chemicals such as detergents and aerosols (sprays); and pot noodle containers. Such containers may have a variety of shapes and may be, for example, cylindrical or rectangular bottles, and cups. Exemplary materials for the containers include plastics such as PETs; glass; and metals.

The container with the label can be produced by cutting the long cylindrical shrink label, attaching the cut label to a predetermined container, shrinking the label through a heating treatment to allow the label to fit and be intimate contact with the container. Specifically, the long cylindrical shrink label in the form of a roll is fed to an automatic labeling machine (shrink labeler), cut to a required length into a cylindrical shrink label, the cylindrical shrink label is fit onto a container filled with a content, subjected to thermal shrinkage typically by allowing the article to pass through a hot-air tunnel or steam tunnel at a predetermined temperature or by heating the article with radial heat such as infrared rays, thereby brought into intimate contact with the container, and thus yields the container with the label. The heat treatment (shrinking process) is preferably carried out at such temperatures that the temperature of the shrink film falls within the range of 70°C to 90°C. A heat treatment, if performed at a film temperature of lower than 70°C, may not allow the shrink label to shrink sufficiently, and this may lead to poor finish quality. In contrast, a heat treatment, if performed on a PET bottle as the container at a film temperature exceeding 90°C, may cause the PET bottle to thermally deform in a non-filled portion at the top of the bottle and in a cap, and/or may cause deterioration of the content. To allow the film temperature to fall within the above-specified range, the heat treatment is performed, for example, by treating with steam at 80°C to 100°C (by passing through a heating tunnel filled with steam and vapor). The shrinking process (heat treatment) is preferably performed for a duration of about 4 to 20 seconds, for further excellent productivity and economical efficiency.

The cylindrical shrink label using the shrink film according to the present invention does not suffer from delamination (delamination during fitting) in a center-sealed portion when applied to containers through shrinking process.

[Methods for Measuring Properties and Methods for Evaluating Advantageous Effects]

(1) Content of Vinyl Acetate Component in Layer B

The product of an "ethylene-vinyl acetate resin content (percent by weight) based on the total weight of the layer B" and a "content (percent by weight) of vinyl acetate component in the ethylene-vinyl acetate resin" is defined as the "content of vinyl acetate component in the layer B". For instance, when the "ethylene-vinyl acetate resin content (percent by weight) based on the total weight of the layer B" is 90 percent by weight, and the "content (percent by weight) of vinyl acetate components in the ethylene-vinyl acetate resin" is 10 percent by weight, the content of vinyl acetate component in the layer B is calculated to be 9 percent by weight. Specifically, the content of vinyl acetate component in the layer B was determined according to the equation: Content of vinyl acetate component (percent by weight) = [Content of the ethylene-vinyl acetate resin in the layer B (percent by weight)] x [Content of vinyl acetate components in the ethylene-vinyl acetate resin (percent by weight)] x 1/100. When the layer B contains two or more types of ethylene-vinyl acetate resins, the "content of vinyl acetate component" herein is defined as the total sum of the contents of vinyl acetate component determined with respect to the respective ethylene-vinyl acetate resins.

The "content (percent by weight) of vinyl acetate in the ethylene-vinyl acetate resin" was measured in accordance with the standard test method 1 prescribed in JIS K7192 (1999).

(2) T(tan $\delta \geq$ 1) (Dynamic Viscoelasticity Measurement)

A dynamic viscoelasticity measurement was performed under conditions below using, as a sample, each resin used as a raw material for the layer B in examples and comparative examples.

In a dynamic viscoelasticity curve plotted as a result of the measurement, a temperature at which tan $\delta$ equals 1 during tan $\delta$ rises from less than 1 to 1 or more was defined as T(tan $\delta \geq$ 1).

(Measuring Instrument and Measuring Conditions)

Instrument: "EXSTAR6000 DMS6100" supplied by Seiko Instruments Inc,
Frequency: 1 Hz
Measurement Temperature: Ordinary temperature (30°C) to 120°C (when the measurement could not performed up to 120°C, the measurement was performed up to a highest measurable temperature.)
Temperature Elevation Rate: 2°C per minute
Measurement Sample: Sheet having a thickness of 250 to 350 $\mu$m, prepared by melting pellets of a sample resin at 200°C and molding molten pellets

(3) Film Interlaminar Bond Strength (T-peel)

The interlaminar bond strength was measured on each shrink film (before shrinking process) prepared in the examples and comparative examples.
Specifically, the shrink film was cut to a length of 15 mm in the machine direction (film-forming direction of the shrink film) to a strip sample. The strip sample extended long in the transverse direction (direction perpendicular to the machine direction of the shrink film) and had a size of 200 mm in the shrink film transverse direction and 15 mm in the shrink film machine direction. Hereinafter the term "sample width direction" refers to the machine direction of the shrink film. T-peel tests (as prescribed in JIS K 6854-3) were conducted in which the measurements were carried out in a longitudinal direction of the sample (in the transverse direction of the shrink film).
The average of peeling loads was defined as an interlaminar bond strength (N/15-mm). A sample having an interlaminar bond strength of 0.7 (N/15-mm) or more was evaluated as having good interlaminar bond strength (A), and a sample having an interlaminar bond strength of less than 0.7 (N/15-mm) was evaluated as having poor interlaminar bond strength (C).

(Measurement Conditions)

Measuring Instrument: Autograph (AGS-IS; capacity of load cell: 500 N) supplied by Shimadzu Corporation
Temperature and Humidity: Temperature of $23\pm2°C$ and relative humidity of $50\pm5\%$ (Standard Temperature Condition Grade 2 as Prescribed in JIS K 7000)
Initial Chuck-to-chuck Distance: 40 mm
Sample Width: 15 mm
Number of tests: 3
Tensile Speed: 200 mm per minute
Stroke: 150 mm (when the sample ruptured, the test was discontinued, and data obtained until this time point were evaluated.)
Cut-off Range in First Portion: 50 mm
Sensitivity: 1

The interlaminar bond strength was evaluated on a pair of layers which showed a lowest interlaminar bond strength among the multilayer structure.

(4) Shrink Percentage (at 90°C for 10 seconds)

Each shrink film prepared in the examples and comparative examples (before shrinking process) was cut into a rectangular sample piece 120 mm long (gauge length 100 mm) in the measurement direction (main orientation direction, corresponding to the transverse direction of the film in the examples and comparative examples) and 5 mm wide.
The sample piece was heated in hot water at 90°C for 10 seconds (under no load), the difference in gauge length between before and after the heat treatment was read out, and the thermal shrink percentage was calculated according to the following formula:

$$\texttt{Shrink Percentage (\%) = } (L_0 - L_1)/L_0 \texttt{ x } 100$$

wherein $L_0$ is the gauge length (main orientation direction) before heat treatment; and
$L_1$ is the gauge length after heat treatment (in the same direction as in $L_0$)

(5) Suppression of Delamination During Fitting (Delamination in Center-sealed Portion after Shrinking Process)

Each shrink film prepared in the examples and comparative examples (with a size of 104 mm in the machine direction and 235 mm in the transverse direction) was rounded into a cylinder with a perimeter of 228 mm so that the film transverse direction stood for a circumferential direction, the rounded film was center-sealed with tetrahydrofuran (THF) in a sealing width of 4 mm and thereby yielded a cylindrical shrink label. Next, the cylindrical shrink label was applied by hand to a container (round cylindrical PET bottle with a perimeter in the barrel of 219 mm), thermally shrunk (shrink-processed) in hot water at 70°C for 30 seconds to give a container with the label. Independently, a series of containers with labels was prepared while carrying out heating at 80°C (in hot water) for 30 seconds or at 90°C (in hot water) for 30 seconds. Twenty-four containers with labels (specimens) were prepared per each temperature condition (70°C, 80°C, or 90°C) to be evaluated.

The center-sealed portions of the containers with the labels were observed. A specimen showing no "delamination" of a size of 5 mm (machine direction) by 0.5 mm (transverse direction) or more was evaluated as an acceptable specimen; and suppression of delamination during fitting was determined according to the following criteria. The delamination herein occurred between the layer A and the layer B.

Good suppression of delamination during fitting (A): Out of 24 specimens, 19 or more specimens are acceptable.
Insufficient suppression of delamination during fitting (B): Out of 24 specimens, 12 or more but 18 or less specimens are acceptable.
Poor suppression of delamination during fitting (C): Out of 24 specimens, 11 or less specimens are acceptable.

(6) Haze (Transparency)

Haze of each shrink film prepared in the examples and comparative examples was measured in accordance with JIS K 7105.

(7) Reflectance

The shrink films prepared in the examples and comparative examples were used to measure diffuse reflectance at a wavelength of 450 nm with the spectrophotometer UV2450 supplied by Shimadzu Corporation.

(8) Color (Tint)

The colors of the shrink films prepared in the examples and comparative examples were evaluated by applying a printing ink by gravure printing to a surface layer which faces inward when rounded into a cylinder, visually observing the print through the film by eyes, and evaluating the color (tint) according to the following criteria:

Good print (A): No dullness in color is observed
Insufficient print (B): Dullness in color is observed
Poor print (C): Print looks unsharp due to cloudiness

Melt flow rates (MFR) in Table 1 and Table 3 were measured at a temperature of 190°C under a load of 2.16 kg in accordance with JIS K6730 (1981).

EXAMPLES

The present invention will be illustrated in further detail with reference to several working examples below. It should be noted, however, that these examples are never intended to limit the scope of the present invention. Formulations of resin compositions for use in these examples for the formation of respective layers, properties of the respective layers, and evaluations of the resulting shrink films are shown in Table 1. Details of respective components used in the examples and comparative examples are shown in Table 2.

EXAMPLE 1

As is shown in Table 1, a resin composition A for constituting layer A used herein contained 100 percent by weight of a CHDM-modified amorphous aromatic polyester resin ("EMBRACE 21214" supplied by Eastman Chemical Company). A resin composition B for constituting layer B contained 100 percent by weight of an ethylene-vinyl acetate copolymer ("EVAFLEX V421" supplied by Du Pont-Mitsui Polychemicals Co., Ltd.). A resin composition C for constituting layer C contained a mixture of 55 percent by weight of a polypropylene resin mixture and 45 percent by weight of a recycled material. The polypropylene resin mixture had been prepared by blending 65 parts by weight of a propylene-$\alpha$-olefin random copolymer ("WINTEC WFX6" supplied by Japan Polypropylene Corporation), 10 parts by weight of an ethylene-$\alpha$-olefin random copolymer ("KERNEL KS340T" supplied by Japan Polyethylene Corporation), and 25 parts by weight of an alicyclic hydrocarbon resin ("ARKON P125" supplied by Arakawa Chemical Industries, Ltd.) to give a resin mixture; adding 0.1 part by weight of a phenolic antioxidant ("Irganox 1010" supplied by Ciba Specialty Chemicals Corporation) to 100 parts by weight of the resin mixture using a Henschel mixer; and granulating the resulting mixture with a twin-screw extruder (45 mm diameter) to give granules of the polypropylene resin mixture.

The resin compositions A, B, and C were placed in an extruder "a" heated at 220°C, extruder "b" heated at 200°C, and extruder "c" heated at 200°C, respectively, followed by melting and extrusion using the three extruders. The resins were merged with a feed block merging system so that a resin extruded from the extruder "c" constitutes a core layer, a resin extruded from the extruder "b" constitutes layers present on both sides of the core layer, and a resin extruded from the extruder "a" constitutes layers present on both sides of the layers from the extruder "b"; the merged resins were extruded through a T-die (1 mm of lip opening), quenched on a casting drum cooled at 25°C to give a five-layer multilayer unstretched film composed of three different components and having a total thickness of 200 $\mu$m. The thickness ratio of the layers in the unstretched film was adjusted to be (surface layer):(intermediate layer):(core layer): (intermediate layer):(surface layer) [A:B:C:B:A]=2:1:6:1:2.

Next, the unstretched film which had been adjusted in thickness was drawn at 90°C to 5-fold stretching in the transverse direction to give a shrink film. The resulting shrink film was shrinkable mainly in a uniaxial direction. The shrink film was adjusted to have a total thickness of 40 $\mu$m with a thickness ratio of the layers in the film of 2:1:6:1:2 by controlling the film-forming speed.

In this connection, a shrink film obtained after performing film-formation while continuously performing recovery (self-recovering or self-recycling) for 40 hours or more was used for evaluations.

The resulting shrink film excelled both in interlaminar bond strength and in suppression of delamination during fitting, as demonstrated in Table 1.

EXAMPLES 2 to 9

Shrink films were prepared by the procedure of Example 1, except for modifying the types of material resins for respective layers as shown in Tables 1 and 2.

The resulting shrink films excelled both in interlaminar bond strength and in suppression of delamination during fitting, as demonstrated in Table 1.

COMPARATIVE EXAMPLES 1 to 6

Shrink films were prepared by the procedure of Example 1, except for varying the types of material resins for respective layers as shown in Tables 1 and 2.

The resulting shrink films suffered from delamination during fitting through shrinking process.

The shrink film according to Comparative Example 6 could not prevent delamination during fitting, although it had a larger interlaminar bond strength than those of the shrink films according to the examples.

Independently, the "FINELAP NTV" ink supplied by DIC Corporation was applied to one side of the shrink film prepared in Example 1 through gravure printing to form a printed layer 2 $\mu$m thick to thereby give a shrink label.

Next, a container with the label was obtained by the procedure as in the test for suppression of delamination during fitting. The shrink label showed satisfactory surface printability, and the container with the label showed excellent finish quality.

[Table 1]

(Table 1)

| | Used materials*1 | | | Details of layer B resin | | | Evaluations | | | | | | |
|---|---|---|---|---|---|---|---|---|---|---|---|---|---|
| | | | | | | | | | Suppression of delamination during fitting | | | | |
| | Surface layer (layer A) | Intermediate layer (layer B) | Core layer (layer C) | Vinyl acetate component content | T (tanδ≥1) | Melt flow rate (MFR) | Shrink percent age (90°C, 10 sec) | Firm interlaminar bond strength | Immersion at 70°C for 30 sec. | | Immersion at 80°C for 30 sec. | | Immersion at 90°C for 30 sec. | |
| | | | | | | | | | Acceptable specimens | Rank | Acceptable specimens | Rank | Acceptable specimens | Rank |
| | | | | wt.% | °C | g/10-min, | % | N/15-mm | number | | number | | number | |
| Ex.1 | EMBRACE 21214 | EVAFLEX V421 | | 28 | 75 | 4 | 59 | 2.7 A | 21 | A | 24 | A | 24 | A |
| Ex.2 | E02 | EVAFLEX V421 | | 28 | 75 | 4 | 55 | 2.0 A | 19 | A | 24 | A | 24 | A |
| Ex. 3 | MGG200 | EVATATE K2010 | | 25 | 80 | 3 | 48 | 2.0 A | 20 | A | 22 | A | 24 | A |
| Ex. 4 | FBS11 | EVATATE K2010 | | 25 | 80 | 3 | 40 | 2.1 A | 21 | A | 22 | A | 24 | A |
| Ex. 5 | SkyGreen | V220 | | 20 | 89 | 2 | 40 | 2.0 A | 19 | A | 19 | A | 22 | A |
| Ex.6 | EMBRACE 21214 | V220 | | 20 | 89 | 2 | 42 | 1.6 A | 20 | A | 22 | A | 23 | A |
| Ex. 7 | EMBRACE 21214 | EVAFLEX V421 | | 28 | 75 | 4 | 44 | 2.1 A | 20 | A | 21 | A | 23 | A |
| Ex. 8 | E02 (50 wt.%) + MGG200 (50 wt.%) | V210 (40 wt %) + EVAFLEX EV170 (60 wt.%) | PP*2 (55 wt.%) | 24 | 79 | 2 | 41 | 1.9 A | 19 | A | 20 | A | 24 | A |

EP 2 233 284 B1

(continued)

| | Used materials*1 | | | Details of layer B resin | | | Shrink percent age (90°C, 10 sec) | Firm interlaminar bond strength | Suppression of delamination during fitting | | | | | |
|---|---|---|---|---|---|---|---|---|---|---|---|---|---|---|
| | Surface layer (layer A) | Intermediate layer (layer B) | Core layer (layer C) | Vinyl acetate component content | T (tan$\delta \geq$1) | Melt flow rate (MFR) | | | Immersion at 70°C for 30 sec. | | Immersion at 80°C for 30 sec. | | Immersion at 90°C for 30 sec. | |
| | | | | | | | | | Acceptable specimens | Rank | Acceptable specimens | Rank | Acceptable specimens | Rank |
| | | | | wt.% | °C | g/10-min, | % | N/15-mm | number | | number | | number | |
| Ex.9 | EMBRACE 21214 (50 wt. %) + MGG200 (50 wt.%) | EVAFLEX EV170 (80 wt.%) + Sumikathene L FS240 (20 wt.%) | + | 26 | 81 | 2 | 40 | 1.8A | 21 | A | 22 | A | 19 | A |
| Com.Ex.1 | EMBRACE 21214 | V206 | recycled material (45 wt.%) | 6 | 106 | 2 | 39 | 0.1 C | 0 | C | 0 | C | 0 | C |
| Com.Ex.2 | EMBRACE 21214 | V210 | | 10 | 101 | 2 | 40 | 2.3 A | 0 | C | 0 | C | 10 | C |
| Com.Ex.3 | EMBRACE 21214 | V215 | | 15 | 98 | 2 | 45 | 1.4 A | 0 | C | 12 | B | 15 | B |
| Com.Ex.4 | EMBRACE 21214 | EVAFLEX EV170 | | 33 | 67 | 2 | 44 | 2.2 A | 22 | A | 18 | B | 16 | B |
| Com.Ex.5 | EMBRACE 21214 | EVAFLEX 40LX | | 41 | 52 | 2 | 44 | 1.5A | 9 | C | 3 | C | 0 | C |

(continued)

| | Used materials*1 | | | Details of layer B resin | | | Shrink percent age (90°C, 10 sec) | Firm interlaminar bond strength | Evaluations | | | | | |
|---|---|---|---|---|---|---|---|---|---|---|---|---|---|---|
| | | | | | | | | | Suppression of delamination during fitting | | | | | |
| | Surface layer (layer A) | Intermediate layer (layer B) | Core layer (layer C) | Vinyl acetate component content | T (tan$\delta \geq$1) | Melt flow rate (MFR) | | | Immersion at 70°C for 30 sec. | | Immersion at 80°C for 30 sec. | | Immersion at 90°C for 30 sec. | |
| | | | | | | | | | Acceptable specimens | Rank | Acceptable specimens | Rank | Acceptable specimens | Rank |
| | | | | wt.% | °C | g/10-min, | % | N/15-mm | number | | number | | number | |
| Com.Ex.6 | EMBRACE 21214 | EVAFLEX V460 | | 19 93 | | 2.6 | 47 | 4.6A | 6 | C | 10 | C | 16 | B |

(*1) The contents of used materials in layers and layer B are each 100 wt. % in Examples 1 to 7 and Comparative Examples 1 to 6.
(*2) PP is a mixture of 100 parts by weight of a resin composition and 0.1 part by weight of a phenolic antioxidant (*Irganox 1010' from Ciba Specialty Chemicals Corporation), in which the resin composition contains 65 parts by weight of "WINTEC WFX6", 10 parts by weight of "KERNEL KS340T", and 25 parts by weight of "ARKON P125'.

[Table 2]

(Table 2)

| | Notation in Table 1 | Composition | Supplier | Resin grade | Remarks |
|---|---|---|---|---|---|
| Materials for layer A | EMBRACE 21214 | CHDM-modfied amorphous aromatic polyester resin | Eastman Chemical Company | EMBRACE 21214 | Tg=74°C |
| | E02 | NPG-modified amorphous aromatic polyester resin | Bell Polyester Products, Inc. | E02 | Tg=74°C |
| | MGG200 | 2,2-Dialkyl-1,3-propanediol-modified amorphous aromatic polyester resin | Bell Polyester Products, Inc | MGG200 | Tg=64°C |
| | FBS11 | CHDM-modified amorphous aromatic polyester resin | Bell Polyester Products, Inc | FBS11 | Tg=65°C |
| | SkyGreen | CHDM-modified amorphous aromatic polyester resin | SK Chemicals | SkyGreen | Tg=74°C |

(continued)

| | Notation in Table 1 | Composition | Supplier | Resin grade | Remarks |
|---|---|---|---|---|---|
| Materials for layer B | V206 | Ethylene-vinyl acetate copolymer | Ube-Maruzen Polyethylene Co., Ltd. | V206 | Vicat softening point=85°C |
| | V210 | Ethylene-vinyl acetate copolymer | Ube-Maruzen Polyethylene Co., Ltd. | V210 | Vcat softening point=74°C |
| | V215 | Ethylene-vinyl acetate copolymer | Ube-Maruzen Polyethylene Co., Ltd. | V215 | Vicat softening point=68°C |
| | V220 | Ethylene-vinyl acetate copolymer | Ube-Maruzen Polyethylene Co., Ltd. | V220 | Vicat softening point=62°C |
| | EVAFLEX V421 | Ethylene-vinyl acetate copolymer | Du Pont-Mitsui Polychemicals Co., Ltd. | EVAFLEX V421 | Vicat softening point<30°C |
| | EVAFLEX V460 | Ethylene-vinyl acetate copolymer | Du Pont-Mitsui Polychemicals Co., Ltd. | EVAFLEX V460 | Vicat softening point=66°C |
| | EVAFLEX EV170 | Ethylene-vinyl acetate copolymer | Du Pont-Mitsui Polychemicals Co., Ltd. | EVAFLEX EV170 | Vicat softening point=33°C |
| | EVAFLEX 40LX | Ethylene-vinyl acetate copolymer | Du Pont-Mitsui Polychemicals Co., Ltd. | EVAFLEX 40LX | Vicat softening point=42°C |
| | EVATATE K2010 | Ethylene-vinyl acetate copolymer | Sumitomo Chemical Co., Ltd. | EVATATE K2010 | Vicat softening point=52°C |
| | Sumikathene-L FS240 | LLDPE | Sumitomo Chemical Co., Ltd. | Sumikathene-L FS240 | |
| Materials for layer C | WINTEC WFX6 | Propylene-n-olefin random copolymer | Japan Polypropylene Corporation | WINTEC WFX6 | |
| | KERNEL KS340T | Ethylene-$\alpha$-olefin random copolymer | Japan Polyethylene Corporation | KERNEL KS340T | |
| | ARKON P125 | Alicyclic hydrocarbon resin | Arakawa Chemical Industries, Ltd. | ARKON P125 | |

EXAMPLES 10 to 22

Shrink films were prepared by the procedure of Example 1, except for using 100 percent by weight of "MGG200" supplied by Bell Polyester Products, Inc. as a resin composition for constituting the layer A, and using material mixtures having the compounding ratios as given in Table 3 as resin compositions for constituting the layer B and layer C, respectively. The shrink films had a thickness ratio of the layers of (surface layer):(intermediate layer):(core layer):(intermediate layer):(surface layer [A:B:C:B:A]=2:1:6:1:2 and a total thickness of 40 $\mu$m. The symbols PET, PP, and EVA in Table 3 refer to as follows:

PET: "MGG200" supplied by Bell Polyester Products, Inc.'

EVA: "EVATATE K2010" supplied by Sumitomo Chemical Co., Ltd. in Examples 10 to 21; and "EVAFLEX V421" supplied by Du Pont-Mitsui Polychemicals Co., Ltd. in Example 22

PP: A mixture of 100 parts by weight of a resin composition and 0.1 part by weight of a phenolic antioxidant ("Irganox 1010" supplied by Ciba Specialty Chemicals Corporation), in which the resin composition contains 65 parts by weight of "WINTEC WFX6", 10 parts by weight of "KERNEL KS340T", and 25 parts by weight of "ARKON P125".

No recovery (recycling) was performed in Examples 10 to 22.

All the resulting shrink films excelled not only in interlaminar bond strength but also in suppression of delamination during fitting after shrinkage, as demonstrated in Table 3.

However, the shrink films according to Examples 17 to 21 caused unsatisfactory coloring, through which the color of the print looked dull. The shrink film according to Example 22 became cloudy, through which the print looked unsharp.

[Table 3]

(Table 3)

| | Core layer (layer C) Compounding ratio in core layer (wt %) | | | Intermediate layer (layer B) Compound ratio in intermediate layer (wt%) | | | Details of layer B resin | | | Haze | Reflectance | Color | Shrink percentage (90°C, 10 sec.) | Film interlaminar bond strength | Evaluations Suppression of delamination during fitting | | | | | |
|---|---|---|---|---|---|---|---|---|---|---|---|---|---|---|---|---|---|---|---|---|
| | | | | | | | Vinyl acetate component content | T (tanδ≥1) | Melt flow rate (MFR) | | | | | | Immersion at 70°C for 30 sec. | | Immersion at 80°C for 30 sec. | | Immersion at 90°C for 30 sec. | |
| | PET | PP | EVA | PET | PP | EVA | wt. % | °C | g/10-min. | % | % | Rank | % | N/15-mm | Number of acceptable specimens | Rank | Number of acceptable specimens | Rank | Number of acceptable specimens | Rank |
| Ex.10 | 0 | 100 | 0 | 0 | 0 | 100 | 25 | 80 | 3.0 | 5.3 | 12 | A | 50 | 1.8A | 23 | A | 24 | A | 24 | A |
| Ex.11 | 0 | 80 | 20 | 0 | 0 | 100 | 25 | 80 | 3.0 | 6.5 | 12 | A | 58 | 1.7A | 23 | A | 24 | A | 24 | A |
| Ex.12 | 20 | 72 | 8 | 5 | 3.1 | 91.9 | 2.3 | 80 | 2.9 | 11.6 | 13 | A | 48 | 1.6A | 24 | A | 22 | A | 22 | A |
| Ex.13 | 22.5 | 69 | 8.5 | 6 | 0 | 94 | 24 | 80 | 2.9 | 14.2 | 13 | A | 55 | 1.3A | 24 | A | 23 | A | 23 | A |
| Ex.14 | 22.5 | 69 | 8.5 | 9 | 0 | 91 | 23 | 80 | 2.8 | 14.1 | 12 | A | 55 | 1.4A | 24 | A | 24 | A | 24 | A |
| Ex.15 | 22.5 | 69 | 8.5 | 0 | 3 | 97 | 24 | 80 | 3.0 | 10.1 | 13 | A | 53 | 1.2A | 24 | A | 20 | A | 20 | A |
| Ex.16 | 22.5 | 69 | 8.5 | 0 | 6 | 94 | 24 | 80 | 3.0 | 9.8 | 13 | A | 52 | 1.2A | 23 | A | 24 | A | 24 | A |
| Ex.17 | 20 | 80 | 0 | 0 | 0 | 100 | 25 | 80 | 3.0 | 8.2 | 14 | B | 51 | 0.8A | 24 | A | 24 | A | 24 | A |
| Ex.18 | 22.5 | 69 | 8.5 | 0 | 0 | 100 | 25 | 80 | 3.0 | 10.0 | 15 | B | 56 | 1.4A | 23 | A | 22 | A | 23 | A |
| Ex.19 | 22.5 | 69 | 8.5 | 3 | 0 | 97 | 24 | 80 | 2.9 | 11.6 | 15 | B | 56 | 1.1A | 24 | A | 22 | A | 23 | A |
| Ex.20 | 22.5 | 69 | 8.5 | 0 | 9 | 91 | 23 | 81 | 2.9 | 11.3 | 15 | B | 52 | 1.2A | 24 | A | 24 | A | 24 | A |
| Ex.21 | 21.5 | 70.3 | 8.2 | 2.5 | 1.5 | 96 | 24 | 80 | 2.9 | 10.4 | 15 | B | 50 | 1.6A | 24 | A | 22 | A | 22 | A |
| Ex.22 | 15 | 79.3 | 5.7 | 17.5 | 10.85 | 71.65 | 20 | 80 | 3.3 | 19.1 | 15 | C | 50 | 1.6A | 24 | A | 22 | A | 22 | A |

The shrink film according to the present invention has a resin layer composed of a polypropylene resin, thereby has a low specific gravity, is lightweight, and can be easily separated typically from PET bottles utilizing the difference in specific gravity upon recycling. The shrink film further has a resin layer composed of an aromatic polyester resin and thereby excels in shrinkability, strength properties (magnitude of toughness), and printability (when the resin layer is used as a surface layer). In addition, the shrink film has high interlaminar bond strengths between respective layers and does not suffer from troubles caused by delamination during production and transfer processes. When the shrink film is adopted to a cylindrical shrink label, the resulting cylindrical shrink label does not suffer from delamination in a center-sealed portion during heat shrinking process. The cylindrical shrink label is therefore useful typically as a cylindrical shrink label to fit around containers such as PET bottles.

## Claims

1. A shrink film comprising a multilayer structure of layers A, B, and C arranged in this order [(layer A)/(layer B)/(layer C)] without the interposition of any other layer, the layer A being a resin layer containing a modified aromatic polyester resin selected from a CHDM-modified PET and a 2,2-dialkyl-1,3-propanediol-modified PET as a main component; the layer B being an intermediate layer containing an ethylene-vinyl acetate resin as a main component and having a content of vinyl acetate component in the layer of from 20 to 30 percent by weight; and the layer C being a resin layer containing a polypropylene resin as a main component and containing a polymeric plasticizer.

2. The shrink film according to claim 1, wherein the shrink film comprises a multilayer structure composed of five layers of three different components, i.e., the layers A, B, C, B, and A arranged in this order [(layer A)/(layer B)/(layer C)/(layer B)/(layer A)] without the interposition of any other layer, and wherein the layers A act as surface layers, and the layer C acts as a core layer.

3. The shrink film according to one of claims 1 and 2, wherein the modified aromatic polyester resin constituting the layer A has a glass transition temperature (Tg) in the range of 60°C to 80°C.

4. The shrink film according to any one of claims 1 to 3, wherein the content of the polymeric plasticizer is from 5 to 30 percent by weight based on the total weight of the layer C.

5. The shrink film according to any one of claims 1 to 4, wherein the layer C further contains a polyethylene.

6. The shrink film according to claim 5, wherein the content of the polyethylene is from 1 to 10 percent by weight based on the total weight of the layer C.

7. The shrink film according to any one of claims 1 to 6, wherein a modified aromatic polyester resin selected from a CHDM-modified PET and a 2,2-dialkyl-1,3-propanediol-modified PET is contained both in the layer B and the layer C, wherein the content of the modified aromatic polyester resin in the layer B is from 5 to 15 percent by weight, and wherein the content of the modified aromatic polyester resin in the layer C is from 20 to 40 percent by weight.

8. The shrink film according to any one of claims 1 to 7, wherein a polypropylene resin is contained in the layer B in a content of 1 to 8 percent by weight, and wherein a modified aromatic polyester resin selected from a CHDM-modified PET and a 2,2-dialkyl-1,3-propanediol-modified PET is contained in the layer C in a content of 20 to 40 percent by weight.

9. The shrink film according to any one of claims 1 to 8, wherein the thickness of the layer A (as a single layer) is from 3 to 15 $\mu$m, wherein the thickness of the layer B (as a single layer) is from 0.5 to 10 $\mu$m, and wherein the thickness of the layer C (as a single layer) is from 10 to 70 $\mu$m.

10. The shrink film according to any one of claims 1 to 9, wherein the percentage of the total thickness of the layer(s) A to the thickness of the layer C is from 40 to 150%.

11. A cylindrical shrink label comprising the shrink film according to any one of claims 1 to 10; and a printed layer on or above at least one side of the shrink film.

## Patentansprüche

1. Schrumpffolie, umfassend eine Mehrschichtenstruktur aus Schichten A, B und C, die in dieser Reihenfolge [(Schicht A)/(Schicht B)/Schicht C)] ohne Zwischenanordnung einer beliebigen anderen Schicht angeordnet sind, wobei die Schicht A eine Harzschicht ist, die ein modifiziertes aromatisches Polyesterharz, das unter einem CHDM-modifizierten PET und einem 2,2-Dialkyl-1,3-Propandiol-modifizierten PET ausgewählt ist, als Hauptkomponente enthält;

wobei die Schicht B eine Zwischenschicht ist, die ein Ethylenvinylacetatharz als Hauptkomponente enthält und einen Gehalt der Vinylacetatkomponente in der Schicht von 20 bis 30 Gew.-% aufweist; und wobei die Schicht C eine Harzschicht ist, die ein Polypropylenharz als Hauptkomponente sowie einen polymeren Weichmacher enthält.

2. Schrumpffolie nach Anspruch 1, wobei die Schrumpffolie eine Mehrschichtenstruktur umfasst, die aus fünf Schichten aus drei verschiedenen Komponenten zusammengesetzt ist, nämlich den Schichten A, B, C, B und A, die in dieser Reihenfolge [(Schicht A)/(Schicht B)/Schicht C)/(Schicht B)/Schicht A)] ohne Zwischenanordnung einer beliebigen anderen Schicht angeordnet sind, und wobei die Schichten A als Oberflächenschichten wirken und die Schicht C als Kernschicht wirkt.

3. Schrumpffolie nach einem der Ansprüche 1 bis 2, wobei das modifizierte aromatische Polyesterharz, das die Schicht A bildet, eine Glasübergangstemperatur (Tg) in dem Bereich von 60 °C bis 80 °C aufweist.

4. Schrumpffolie nach einem der Ansprüche 1 bis 3, wobei der Gehalt des polymeren Weichmachers von 5 bis 30 Gew.-% auf Grundlage des Gesamtgewichtes der Schicht C ist.

5. Schrumpffolie nach einem der Ansprüche 1 bis 4, wobei die Schicht C des Weiteren ein Polyethylen enthält.

6. Schrumpffolie nach Anspruch 5, wobei der Gehalt des Polyethylens von 1 bis 10 Gew.-% auf Grundlage des Gesamtgewichtes der Schicht C ist.

7. Schrumpffolie nach einem der Ansprüche 1 bis 6, wobei ein modifiziertes aromatisches Polyesterharz, das unter einem CHDM-modifizierten PET und einem 2,2-Dialkyl-1,3-Propandiol-modifizieten PET ausgewählt ist, sowohl in der Schicht B wie auch in der Schicht C enthalten ist, wobei der Gehalt des modifizierten aromatischen Polyesterharzes in der Schicht B von 5 bis 15 Gew.-% ist und wobei der Gehalt des modifizierten aromatischen Polyesterharzes in der Schicht C von 20 bis 40 Gew.-% ist.

8. Schrumpffolie nach einem der Ansprüche 1 bis 7, wobei ein Polypropylenharz in der Schicht B mit einem Gehalt von 1 bis 8 Gew.-% enthalten ist und wobei ein modifiziertes aromatisches Polyesterharz, das unter einem CHDM-modifizierten PET und einem 2,2-Dialkyl-1,3-Propandiol-modifizieten PET ausgewählt ist, in der Schicht C mit einem Gehalt von 20 bis 40 Gew.-% enthalten ist.

9. Schrumpffolie nach einem der Ansprüche 1 bis 8, wobei die Dicke der Schicht A (als einzelne Schicht) von 3 bis 15 $\mu$m ist, die Dicke der Schicht B (als einzelne Schicht) von 0,5 bis 10 $\mu$m ist und die Dicke der Schicht C (als einzelne Schicht) von 10 bis 70 $\mu$m ist.

10. Schrumpffolie nach einem der Ansprüche 1 bis 9, wobei der prozentuale Anteil der Gesamtdicke der Schicht(en) A zu der Dicke der Schicht C von 40 bis 150% ist.

11. Zylindrisches Schrumpfetikett, umfassend die Schrumpffolie nach einem der Ansprüche 1 bis 10 und eine Druckschicht an oder über wenigstens einer Seite der Schrumpffolie.

## Revendications

1. Film rétractable comprenant une structure multicouche de couches A, B et C agencées dans cet ordre [(couche A) /(couche B)/(couche C)] sans interposition d'une quelconque autre couche, la couche A étant une couche de résine contenant, à titre de composant principal, une résine de polyester aromatique modifié choisie parmi un PET modifié par du CHDM et un PET modifié par un 2,2-dialkyl-1,3-propanediol ; la couche B étant une couche intermédiaire contenant, à titre de composant principal, une résine d'éthylène/acétate de vinyle, et ayant une teneur en composant acétate de vinyle dans la couche de 20 à 30 % en poids ; et la couche C étant une couche de résine contenant, à titre de composant principal, une résine de polypropylène, et contenant un plastifiant polymère.

2. Film rétractable selon la revendication 1, lequel film rétractable comprend une structure multicouche composée de cinq couches de trois composants, c'est-à-dire les couches A, B, C, B et A agencées dans cet ordre [(couche A)/ (couche B)/(couche C)/(couche B)/couche A)] sans interposition d'une quelconque autre couche, dans lequel les couches A agissent comme des couches de surface, et la couche C agit comme une couche de coeur.

**3.** Film rétractable selon l'une quelconque des revendications 1 et 2, dans lequel la résine de polyester aromatique modifié constituant la couche A a une température de transition vitreuse (Tg) située dans la plage allant de 60°C à 80°C.

**4.** Film rétractable selon l'une quelconque des revendications 1 à 3, dans lequel la teneur en le plastifiant polymère est de 5 à 30 % en poids par rapport au poids total de la couche C.

**5.** Film rétractable selon l'une quelconque des revendications 1 à 4, dans lequel la couche C contient en outre un polyéthylène.

**6.** Film rétractable selon la revendication 5, dans lequel la teneur en le polyéthylène est de 1 à 10 % en poids par rapport au poids total de la couche C.

**7.** Film rétractable selon l'une quelconque des revendications 1 à 6, dans lequel une résine de polyester aromatique modifié choisie parmi un PET modifié par du CHDM et un PET modifié par un 2,2-dialkyl-1,3-propanediol est présente tant dans la couche B que dans la couche C, dans lequel la teneur en la résine de polyester aromatique modifié dans la couche B est de 5 à 15 % en poids, et dans lequel la teneur en la résine de polyester aromatique modifié dans la couche C est de 20 à 40 % en poids.

**8.** Film rétractable selon l'une quelconque des revendications 1 à 7, dans lequel une résine de polypropylène est présente dans la couche B en une proportion de 1 à 8 % en poids, et dans lequel une résine de polyester aromatique modifié choisie parmi un PET modifié par du CHDM et un PET modifié par un 2,2-dialkyl-1,3-propanediol est présente dans la couche C en une proportion de 20 à 40 % en poids.

**9.** Film rétractable selon l'une quelconque des revendications 1 à 8, dans lequel l'épaisseur de la couche A (sous forme d'une seule couche) est de 3 à 15 $\mu$m, dans lequel l'épaisseur de la couche B (sous forme d'une seule couche) est de 0,5 à 10 $\mu$m, et dans lequel l'épaisseur de la couche C (sous la forme d'une seule couche) est de 10 à 70 $\mu$m.

**10.** Film rétractable selon l'une quelconque des revendications 1 à 9, dans lequel le pourcentage de l'épaisseur totale de la ou des couches A par rapport à l'épaisseur de la couche C est de 40 à 150 %.

**11.** Etiquette rétractable cylindrique comprenant le film rétractable selon l'une quelconque des revendications 1 à 10 ; et une couche imprimée sur ou au-dessus d'au moins un côté du film rétractable.

## REFERENCES CITED IN THE DESCRIPTION

**Patent documents cited in the description**

- WO 2007050605 A2
- JP 2006326952 A
- JP H111999262981 A